# EUROPEAN PATENT SPECIFICATION

(11) **EP 2 138 390 B1**
(45) Date of publication and mention of the grant of the patent: **18.07.2012**
(21) Application number: 09251547.7
(22) Date of filing: 12.06.2009
(51) Int. Cl.: B62J 6/00, B62J 6/02

(54) **Lamp and motorcycle**
Scheinwerfer und Motorrad
Phare et motocyclette

(30) Priority: 27.06.2008 JP 2008168662
(43) Date of publication of application: 30.12.2009
(73) Proprietor: Yamaha Hatsudoki Kabushiki Kaisha, Shizuoka-ken 438-8501 (JP)
(72) Inventor: Ogata, Tomokazu, Iwata-shi Shizuoka-ken (JP); Tanemo, Hideo, Iwata-shi Shizuoka-ken (JP)
(74) Representative: Grünecker, Kinkeldey, Stockmair & Schwanhäusser

(56) References cited:
- EP-A- 1 908 630
- US-A1- 2006 193 143

## Description

### Technical Field

The present invention relates to a lamp and a motorcycle.

### Background Art

A lamp provided in a motorcycle may be of the type which includes a pair of right and left flasher units and a connecting unit connecting these flasher units to each other. A lamp disclosed in, for example, Japanese Patent Application Laid-Open Publication No. 8-310464 includes a pair of right and left flashers and a linear connecting unit connecting these flasher units.

For safety purposes, it is desirable that each flasher unit should have a high visibility and is, therefore, formed to be large. However, if the connecting unit connects the flasher units as stated above and each flasher unit is formed large, the lamp is made large entirely. This may possibly deteriorate the rigidity of the lamp.

EP-A-1,908,630 discloses a lamp comprising right and left flasher units and a central connecting unit which is a headlight unit. A front lens provides two flasher lenses and a headlight lens and the front lens has a front face with a central vertical recess. Document US 2006/0193143 discloses also a lamp comprising right and left fasher units with enhanced visibility accordingly to the preamble of claim 1.

It is an object of the present invention to be able to improve the visibility of a flasher unit and to suppress deterioration in rigidity of a lamp.

### Summary

A lamp according to the present invention includes a pair of right and left flasher units and a connecting unit. The pair of left and right flasher units each have a lens unit with a vertical height which is larger than a horizontal width in a front view and/or a longitudinal length which is larger than the horizontal width in a top view. The connecting unit has a lens unit having a bent shape in the front view and/or the top view and connects the flasher units to each other. The lens units of the pair of flasher units and the lens unit of the connecting unit include an integrated common lens surface. The front face of the integrated common lens surface is continuous seamlessly.

In this lamp, the lens unit of each flasher unit has a shape which is relatively long vertically and/or longitudinally. Due to this, the visibility of each flasher unit can be improved. Furthermore, since the lens unit of the connecting unit has the bent shape, it is possible to suppress deterioration in rigidity of the lamp even if the lamp is made large entirely.

A motorcycle according to the present invention includes a front cover arranged in front of a head pipe and a lamp which is in accordance with the present invention and is provided on the front cover.

In this motorcycle, the lens unit of each flasher unit has a shape which is relatively long vertically and/or longitudinally. Due to this, the visibility of each flasher unit can be improved. Furthermore, since the lens unit of the connecting unit has the bent shape, it is possible to suppress the deterioration in rigidity of the lamp even if the lamp is made large entirely.

According to embodiments of the present invention, the visibility of each flasher unit can be improved and the deterioration in rigidity of the lamp can be suppressed.

### Brief Description of the Drawings

Embodiments of the invention are described below, by way of example only, with reference to the drawings.
FIG. 1 is a side view of a motorcycle.
FIG. 2 is a front view of a front portion of a motorcycle.
FIG. 3 is a top view of the front portion of the motorcycle.
FIG. 4 is a perspective view of a lamp.
FIG. 5 is a front view of the lamp.
FIG. 6 is a top view of the lamp.
FIG. 7 is a front view of a housing of the lamp.
FIG. 8 is a front view of a front cover.
FIG. 9 is a side view of the front cover.

While the invention is susceptible to various modifications and alternative forms, specific embodiments are shown by way of example in the drawings and are herein described in detail. It should be understood, however, that the drawings and detailed description are not intended to limit the invention to the particular form disclosed but, on the contrary, the invention is to cover all modifications, equivalents and alternatives falling within the spirit and scope of the present invention as defined in the appended claims.

### Detailed Description

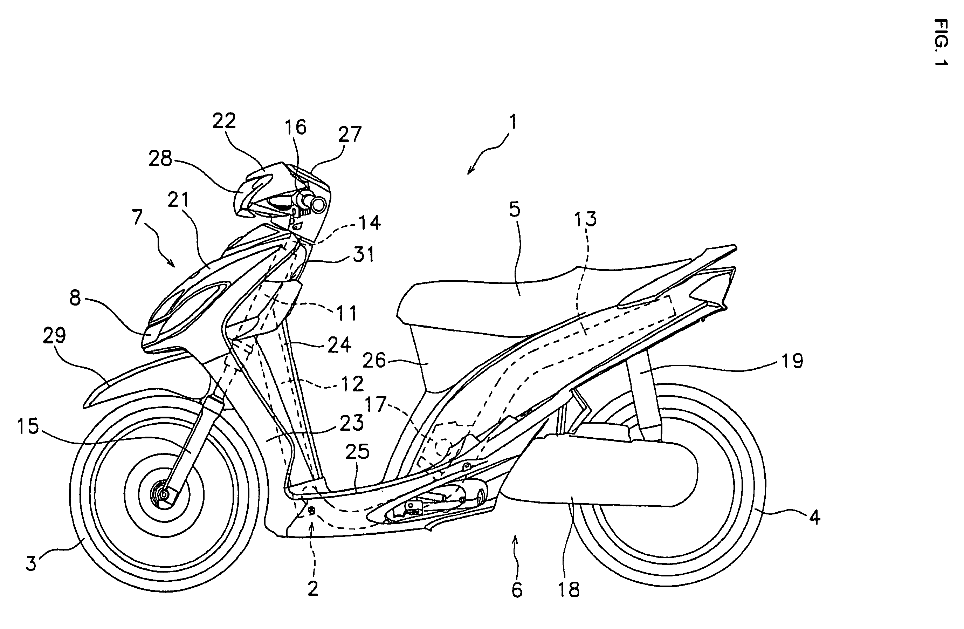

FIG. 1 shows a motorcycle 1 according to an embodiment of the present invention. FIG. 1 is a side view of the motorcycle 1.

### 1. Overall Configuration

The motorcycle 1 is a scooter type motorcycle and includes a main body frame 2, a front wheel 3 and a rear wheel 4, a seat 5, a power unit 6 and a cover member 7.

The main body frame 2 includes a head pipe 11, a main frame 12 and a pair of right and left side frames 13. It is to be noted that FIG. 1 only shows one of the paired side frames 13.

A steering shaft 14 is inserted into the head pipe 11 and the head pipe 11 rotatably supports the steering shaft 14. A front fork 15 is attached to a lower end of the steering shaft 14. A lower end of the front fork 15 pivotally supports the front wheel 3. Further, a steering handle bar 16 is fixed to an upper end of the steering shaft 14.

The main frame 12 is connected to the head pipe 11 and extends backward from the head pipe 11 and obliquely downward.

The side frame 13 is connected to a lower end of the main frame 12 and extends backward from the main frame 12 and obliquely upward. The seat 5 is arranged above the side frame 13.

The power unit 6 is supported by the side frame 13 and includes an engine 17 and a transmission 18 for transmitting power from the engine 17 to the rear wheel 4. A rear end of the transmission 18 pivotally supports the rear wheel 4. A rear cushion unit 19 is provided between the transmission 18 and the side frame 13.

It is to be noted that each of the front wheel 3 and the rear wheel 4 has a relatively large diameter and the diameter of each of the front wheel 3 and the rear wheel 4 is larger than a vertical size of a front cover to be described later.

The cover member 7 is a resin member and covers up the main body frame 2 and the steering handle bar 16. The cover member 7 includes a front cover 21, a handle cover 22, an inner fender 23, a leg shield 24, a footboard 25, a side cover 26 and the like.

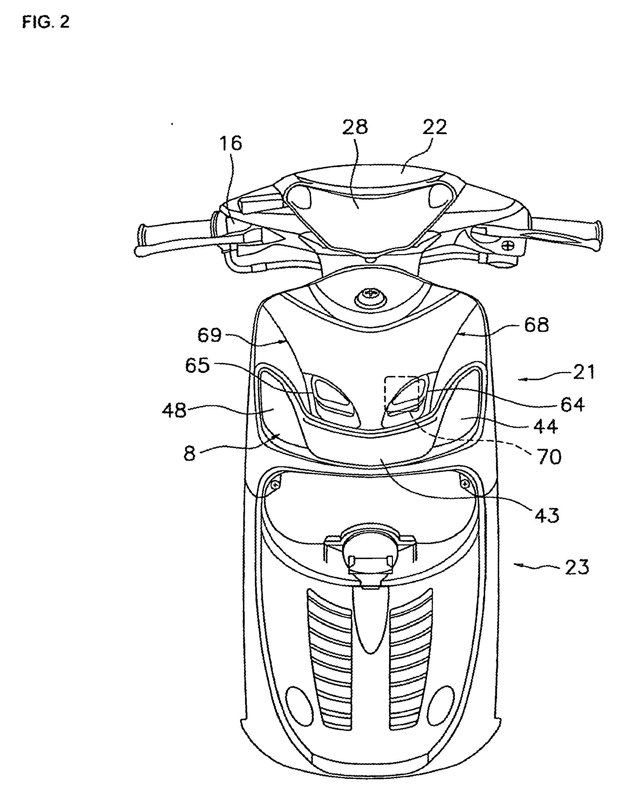

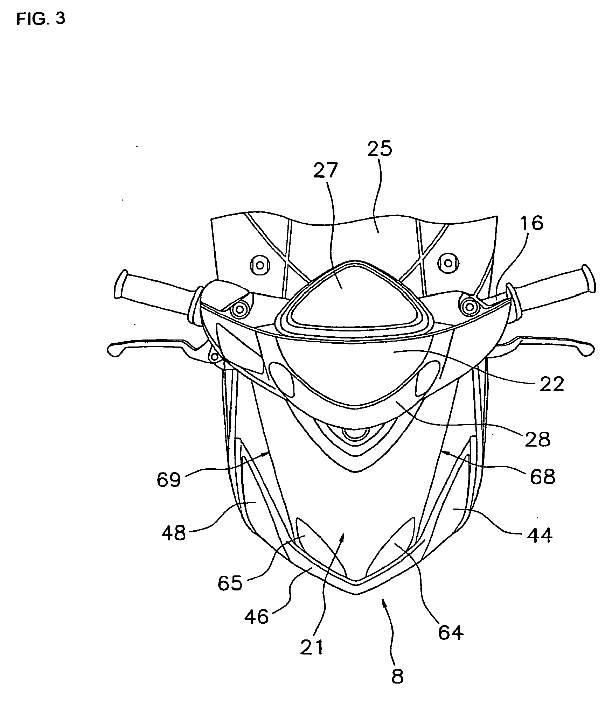

The front cover 21 is arranged in front of the head pipe 11. Further, as shown in FIGS. 2 and 3, a lamp 8 is attached to the front cover 21. FIG. 2 is a front view of a front portion of the motorcycle 1. FIG. 3 is a top view of the front portion of the motorcycle 1. It is to be noted, however, that FIGS. 2 and 3 partially fail to show a configuration of the motorcycle 1 such as the front wheel 3 and the main body frame 2. The front cover 21 and the lamp 8 will be described later in detail.

The handle cover 22 is arranged above the front cover 21 and covers up the steering handle bar 16. A meter panel 27 including a fuel indicator and a speed indicator is arranged on an upper surface of the handle cover 22. Furthermore, a headlight 28 is attached to a front surface of the handle cover 22. The headlight 28 is located above the front cover 21. Since the handle cover 22 rotates along with the steering handle bar 16, the headlight 28 also rotates along with the steering handle bar 16. Due to this, the headlight 28 can irradiate light appropriately in a traveling direction.

The inner fender 23 is arranged below the front cover 21. The inner fender 23 is arranged in the rear of the front wheel 3 and covers up a rear portion of the front wheel 3. As shown in FIG. 1, a front fender 29 is arranged above the front wheel 3 and covers up an upper portion of the front wheel 3.

The leg shield 24 is arranged in the rear of the front cover 21 and the inner fender 23 and covers up a rear portion of the main frame 12. An inner pocket 31 used as a storage unit is formed in a portion of the leg shield 24 which is located in the rear of the front cover 21. A front portion of the inner pocket 31 is fitted into the front cover 21. This can ensure that the inner pocket 31 has a wide accommodation space.

The footboard 25 is a part on which a passenger puts his or her foot and arranged between the front wheel 3 and the rear wheel 4. The footboard 25 is connected to a lower end of the leg shield 24.

The side cover 26 is arranged in the rear of the footboard 25 and provided to surround a lower periphery of the seat 5.

### 2. Configuration of Lamp 8

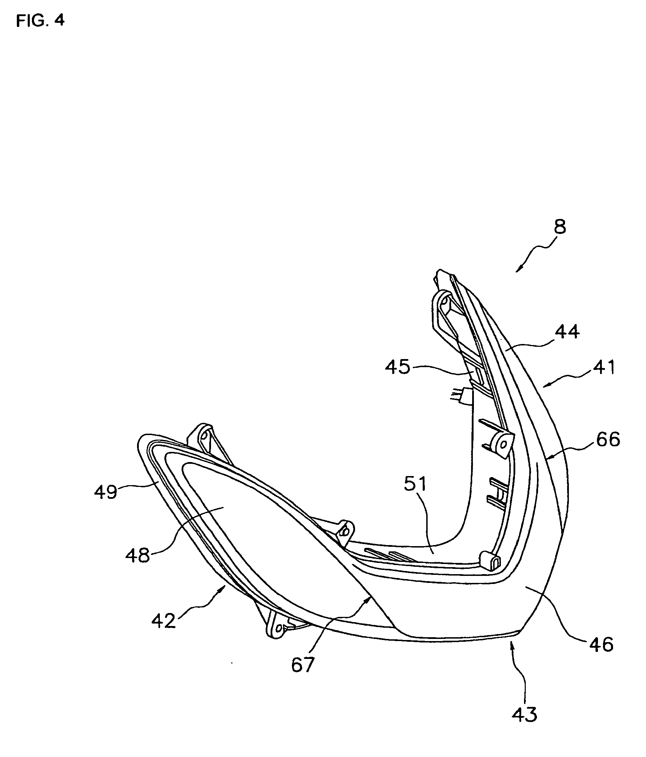

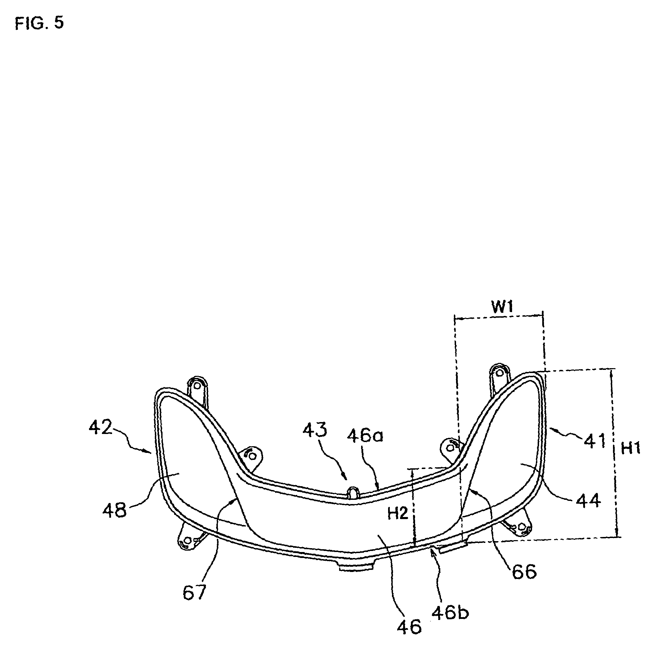

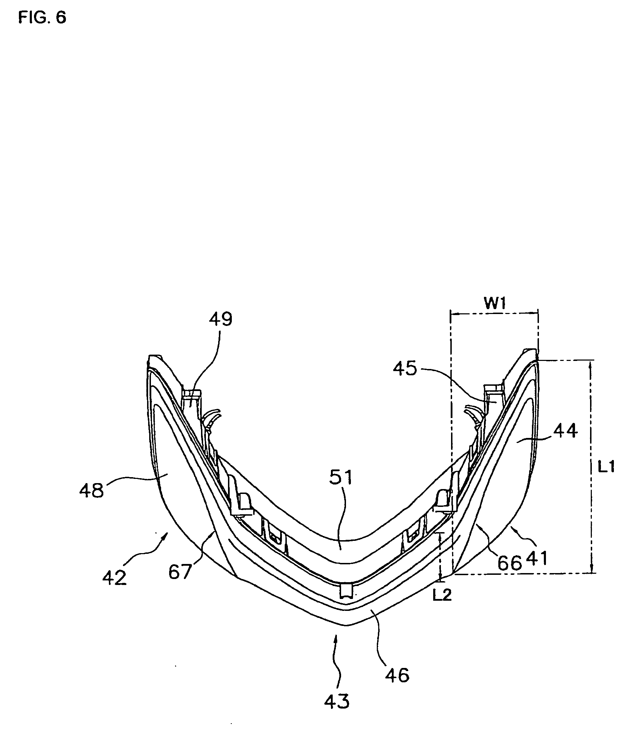

Next, a configuration of the lamp 8 will be described in detail. As shown in FIGS. 4 to 6, the lamp 8 includes a pair of right and left flasher units 41 and 42 which are transversely spaced apart by a central connecting unit 43. FIG. 4 is a perspective view of the lamp 8, FIG. 5 is a front view of the lamp 8 and FIG. 6 is a top view of the lamp 8.

The paired flasher units 41 and 42 are arranged bilaterally symmetric in a front view (see FIG. 5). The flasher unit located on a right side in the front view will be referred to as "first flasher unit 41" and the flasher unit located on a left side in the front view will be referred to as "second flasher unit 42" hereinafter.

The first and second flasher units 41 and 42 are also bilaterally symmetric in top view (see FIG. 6).

The first flasher unit 41 and the second flasher unit 42 are each shaped to be generally elongate and to extend generally outwards, upwards and backwards from a front end to a rear end, such that the transverse separation between the rear or upper ends of the first and second flasher units 41 and 42 is greater than the transverse separation between the front or lower ends of the first and second flasher units 41 and 42.

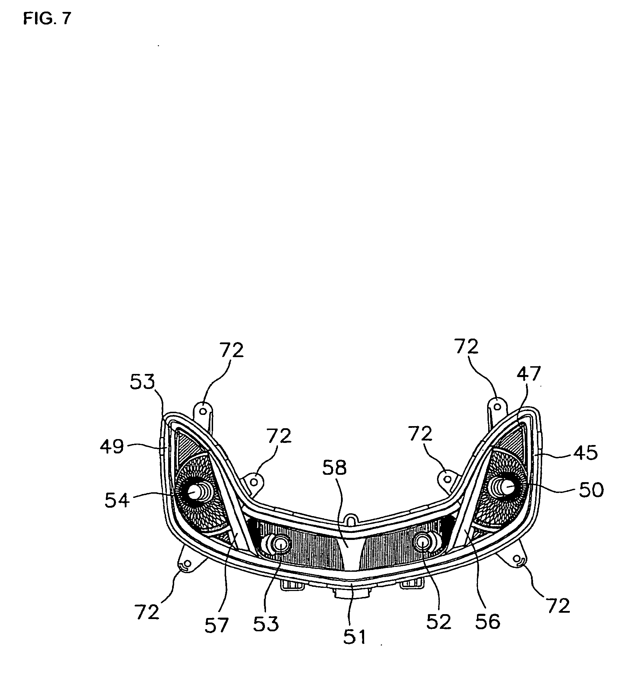

The first flasher unit 41 includes a first lens unit 44, a first housing unit 45 and a first flasher light source such as a bulb 50 (see FIG. 7).

The first lens unit 44 is formed out of a translucent resin such as a transparent resin. The first lens unit 44 constitutes a front surface of the first flasher unit 41. The first lens unit 44 has a shape longer vertically than horizontally in the front view and longer longitudinally than horizontally in the top view. Namely, as shown in FIG. 5, in the front view, a vertical height H1 of the first lens unit 44 is larger than a horizontal width W1. As shown in FIG. 6, in the top view, a longitudinal length L1 is larger than the horizontal width W1. The horizontal width of the first lens unit 44 means herein a horizontal length (e.g. transverse or perpendicular to a longitudinal axis or a central axis of symmetry of the lamp 8) from an innermost portion of the first lens unit 44 to an outermost portion thereof in a part outside of or outboard of a boundary line 66 shown between the first lens unit 44 and a connecting lens unit 46 to be described later. This boundary line 66 is formed by a discontinuity in the lens surface between the first lens unit 44 and the connecting lens unit 46. Specifically, the boundary line 66 is formed by a convex portion or step up protruding from the lens surface. Furthermore, the vertical height of the first lens unit 44 means herein a vertical length from an uppermost portion of the first lens unit 44 to a lowermost portion thereof in a part outside of the boundary line 66. The longitudinal length of the first lens unit 44 means herein a longitudinal length from an anteriormost portion of the first lens unit 44 to a rearmost portion thereof in a part outside of the boundary line 66. In the front view, the first lens unit 44 protrudes more upwardly than an upper edge 46a of the connecting lens unit 46 to be described later, and the vertical height H1 of the first lens unit 44 is larger than a vertical height H2 of the connecting lens unit 46. In the top view, the first lens unit 44 protrudes more backwardly than the connecting lens unit 46, and the longitudinal length L1 of the first lens unit 44 is larger than a longitudinal length L2 of the connecting lens unit 46. The vertical height H2 of the connecting lens unit 46 means herein a vertical length of the connecting lens unit 46 in a part inside of or inboard of the boundary line 66 and in a boundary portion between the connecting lens unit 46 and the first lens unit 44. The longitudinal length L2 of the connecting lens unit 46 means herein a longitudinal length of the connecting lens unit 46 in the part inward of the boundary line 66 and in the boundary portion between the connecting lens unit 46 and the first lens unit 44.

The first housing unit 45 is formed out of a resin and a front surface of the first housing unit 45 is covered with the first lens unit 44. As shown in FIG. 7, the first housing unit 45 has an external shape substantially similar to an external shape of the first lens unit 44 in the front view. FIG. 7 is a front view of the lamp 8 in a state of detaching the lens surface. It is to be noted that a vent hole 47 penetrating the first housing unit 45 is provided in an upper end of the first housing unit 45.

The first flasher bulb 50 is attached to the first housing unit 45 and accommodated in a space between the first housing unit 45 and the first lens unit 44.

As shown in FIGS. 4 to 7, the second flasher unit 42 includes a second lens unit 48, a second housing unit 49 and a second flasher light source such as a bulb 54. The second flasher unit 42 is shaped to be bilaterally symmetric to the first flasher unit 41 in the front view. The second lens unit 48 corresponds to the first lens unit 44, the second housing unit 49 corresponds to the first housing unit 45 and the second flasher bulb 54 corresponds to the first flasher bulb 50. Due to this, the second lens unit 48, the second housing unit 49 and the second flasher bulb 54 will not be described in detail. It is to be noted that a boundary line 67 is shown between the second lens unit 48 and the connecting lens unit 46. Further, as shown in FIG. 7, a vent hole 53 is provided in the second housing unit 49 similarly to the first housing unit 45.

The connecting unit 43 connects the first flasher unit 41 to the second flasher unit 42. The connecting unit 43 has a shape bent downwards and forwards at a horizontally central portion of the connecting unit 43. The connecting unit 43 includes the connecting lens unit 46, a connecting housing unit 51 and a pair of position light sources such as bulbs 52 and 53.

The connecting lens unit 46 is formed out of a translucent resin and constitutes a front surface of the connecting unit 43. As shown in FIG. 5, the connecting lens unit 46 has a shape longer and thinner horizontally than vertically in the front view and bent downwards at a horizontally central portion of the connecting lens unit 46. As shown in FIG. 6, the connecting lens unit 46 has a shape bent forwards in the top view. It is to be noted that a front end of the connecting lens unit 46 is located forward from a front end of the front cover 21 (see FIG. 3).

The connecting housing unit 51 is formed out of a resin and a front surface of the connecting housing unit 51 is covered with the connecting lens unit 46. The connecting housing unit 51 is accommodated in the front cover 21 when the lamp 8 is attached to the front cover 21. Furthermore, the connecting housing unit 51 has an external shape substantially similar to an external shape of the connecting lens unit 46 in the front view.

As shown in FIG. 7, the paired position bulbs 52 and 53 are arranged to be horizontally spaced apart from each other in the front view and attached to the connecting housing unit 51. The position bulbs 52 and 53 are accommodated in a space between the connecting housing unit 51 and the connecting lens unit 46. In the front view, the first flasher bulb 50 and the second flasher bulb 54 stated above are arranged to be shifted upward with respect to the position bulbs 52 and 53. Moreover, the first flasher bulb 50 and the second flasher bulb 54 are located upward from an upper edge 46a (see FIG. 5) of the connecting unit 43 in the front view.

The first lens unit 44, the second lens unit 48 and the connecting lens unit 46 stated above are formed integrally and seamlessly. The first flasher unit 41, the second flasher unit 42 and the connecting unit 43 have an integrated common lens surface. Moreover, the first housing unit 45, the second housing unit 49 and the connecting housing unit 51 stated above are formed integrally and seamlessly. The first flasher unit 41, the second flasher unit 42 and the connecting unit 43 have an integrated common housing. As shown in FIG. 7, a front surface of this housing is formed to reflect light from the flasher bulbs 50 and 54 and the position bulbs 52 and 53 and formed into, for example, a mirror surface. Furthermore, within the housing, a first partition member 56 divides the first housing unit 45 from the connecting housing unit 51. A second partition member 57 divides the connecting housing unit 51 from the second housing unit 49. A third partition member 58 divides off a space within the connecting housing unit 51 into right and left. The position bulbs 52 and 53 are arranged in the right and left space, respectively. It is to be noted that a plurality of ribs 72 for attaching the lamp 8 to the front cover 21 is provided in the housing.

### 3. Configuration of Front Cover 21

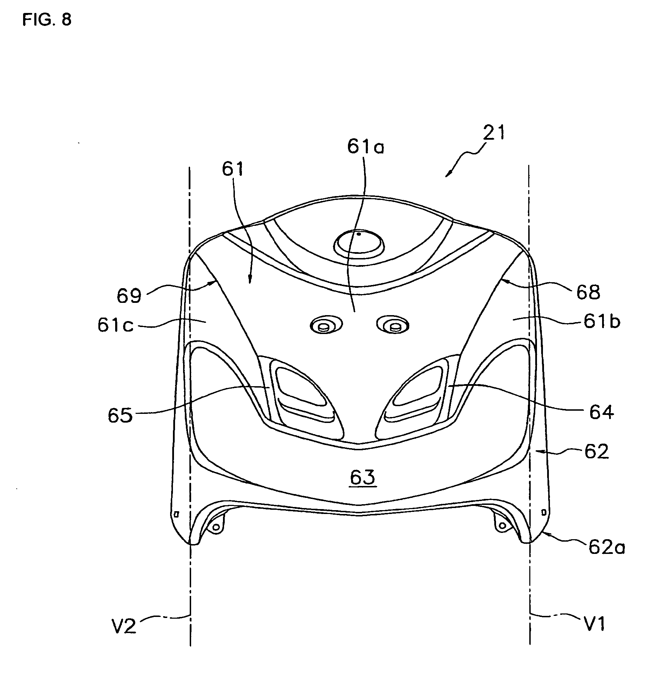

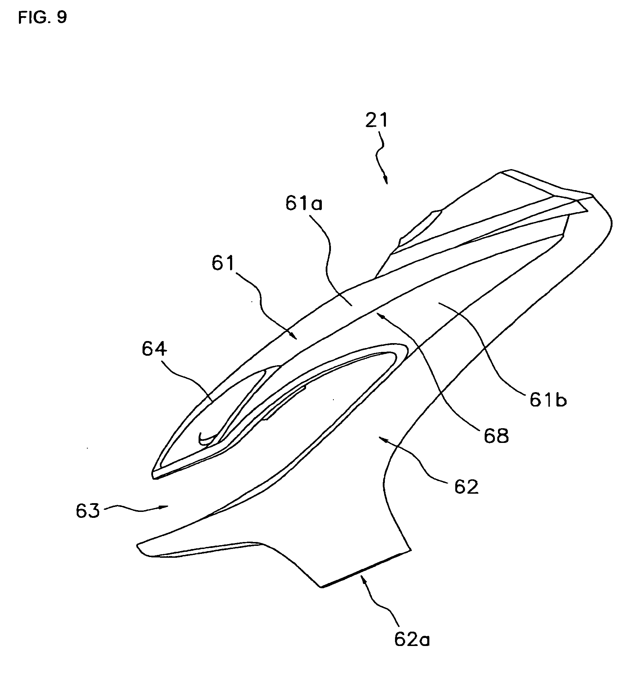

A configuration of the front cover 21 will be described in detail. The front cover 21 is made of a resin and formed integrally and seamlessly. As shown in FIGS. 8 and 9, the front cover 21 is formed stereoscopically and includes a front surface portion 61 and side surface portions 62. FIG. 8 is a front view of the front cover 21 and FIG. 9 is a side view of the front cover 21. As shown in FIG. 9, the front surface portion 61 constitutes a front surface of the front cover 21 and is arranged to be inclined so that an upper end is located backward from a lower end. The side surface portions 62 constitute side surfaces of the front cover 21, respectively. A lower end 62a of each side surface portion 62 abuts on an upper end of the above-stated inner fender 23.

An opening 63 to which the lamp 8 is attached is provided in the front surface portion 61 of the front cover 21. This opening 63 has a shape corresponding to the lens surface of the lamp 8 stated above.

Furthermore, a pair of holes 64 and 65 are provided in the front cover 21. In the front view of the front cover 21, the holes 64 and 65 are provided between a pair of virtual perpendiculars V1 and V2. These perpendiculars V1 and V2 are virtual lines drawn to pass through both horizontally outer ends of the opening 63, respectively. More specifically, the holes 64 and 65 are arranged bilaterally symmetrically to be spaced apart from each other horizontally. In a state in which the lamp 8 is attached to the front cover 21, these holes 64 and 65 are entirely arranged between the first lens unit 44 and the second lens unit 48 (see FIG. 2). That is, the holes 64 and 65 are provided laterally inwards of the above-stated first flasher bulb 50 and second flasher bulb 54 (see FIG. 7), respectively, and arranged above the connecting unit 43.

As shown in FIGS. 8 and 9, the front surface portion 61 of the front cover 21 is shaped so that a central portion 61 a located above the opening 63 projects from both side portions 61 b and 61 c, and a pair of steps 68 and 69 protruding upward are formed between the central portion 61 a and the both side portions 61 b and 61c, respectively. These steps 68 and 69 are arranged to be spaced apart from each other horizontally between the first lens unit 44 and the second lens unit 48 (see FIGS. 2 and 3). Out of these steps 68 and 69, the step located on a right side in the front view will be referred to as "first step 68" and the step located on a left side in the front view will be referred to as "second step 69". As shown in FIG. 8, the first step 68 and the second step 69 are provided to run from an upper portion of the front cover 21 to an upper edge of the opening 63 in the front view. Furthermore, the first step 68 and the second step 69 have a bigger step height than the height of the step forming the boundary line 66 or 67 on the lens surface of the lamp 8. It is to be noted that the paired holes 64 and 65 are located between the first step 68 and the second step 69.

Moreover, as shown in FIG. 2, a horn 70 is accommodated in the front cover 21 and the horn 70 is arranged to be opposed to the hole 64.

### 4. Advantages of the Embodiment

(1) In this motorcycle 1, each of the first flasher unit 41 and the second flasher unit 42 of the lamp 8 has a shape longer vertically and longitudinally. Due to this, it is possible to improve the visibility of each of the first flasher unit 41 and the second flasher unit 42. Further, the connecting unit 43 has a bent shape, so that it is possible to suppress deterioration in rigidity of the lamp 8 even if the lamp 8 is made large.
(2) In this motorcycle 1, the vertical height H1 of each of the first flasher unit 41 and the second flasher unit 42 is larger than the vertical height H2 of the connecting unit 43 in the front view. Furthermore, in the top view, the longitudinal length L1 of each of the first flasher unit 41 and the second flasher unit 42 is larger than the longitudinal length L2 of the connecting unit 43. Due to this, it is possible to further improve the visibility of each of the first flasher unit 41 and the second flasher unit 42.
(3) In this motorcycle 1, the first flasher bulb 50 and the second flasher bulb 54 are located above the upper edge 46a of the connecting unit 43 in the front view. Due to this, it is possible to improve the visibility of each of the first flasher bulb 50 and the second flasher bulb 54.
(4) In this motorcycle 1, the vent holes 47 and 53 are provided in the first flasher unit 41 and the second flasher unit 42, respectively. Due to this, the air within the first flasher unit 41 and the second flasher unit 42 can be easily discharged outside. This can thereby suppress occurrence of blur on the first lens unit 44 and the second lens unit 48.
(5) In this motorcycle 1, the lamp 8 includes the integrated housing common to the first flasher unit 41, the second flasher unit 42 and the connecting unit 43. Due to this, an attachment accuracy for attaching the lamp 8 to the front cover 21 can be improved as compared with an instance in which housings of the first flasher unit 41, the second flasher unit 42 and the connecting unit 43 are attached to the front cover 21 as separate components, respectively.
(6) In this motorcycle 1, the lamp 8 has the integrated lens surface common to the first flasher unit 41, the second flasher unit 42 and the connecting unit 43. Due to this, a front face of the lens surface is shaped to be continuous seamlessly. This can reduce air resistance on the lens surface.

### 5. Other Embodiments

(a) The motorcycle 1 according to the preceding embodiment may be modified by attaching a front basket to the front cover 21.
(b) In the preceding embodiment, the vertical height H1 of each of the first flasher unit 41 and the second flasher unit 42 is larger than the vertical height H2 of the connecting unit 43 in the front view. Furthermore, in the top view, the longitudinal length L1 of each of the first flasher unit 41 and the second flasher unit 42 is larger than the longitudinal length L2 of the connecting unit 43. However, it suffices that the vertical height H1 of each of the first flasher unit 41 and the second flasher unit 42 is larger than the vertical height H2 of the connecting unit 43 in the front view or that the longitudinal length L1 of each of the first flasher length 41 and the second flasher unit 42 is larger than the longitudinal length L2 of the connecting unit 43.
   Moreover, in the preceding embodiment, the connecting unit 43 has the bent shape in the front view and the top view. Alternatively, the connecting unit 43 may have the bent shape either in the front view or the top view.
(c) In the preceding embodiment, the first flasher unit 41 and the second flasher unit 42 protrude upward from the connecting unit 43. Alternatively, the first flasher unit 41 and the second flasher unit 42 may protrude downward from the connecting unit 43. In another alternative, the first flasher unit 41 and the second flasher unit 42 may protrude both upward and downward from the connecting unit 43.
(d) In the preceding embodiment, the first flasher bulb 50 and the second flasher bulb 54 are located above the position bulbs 52 and 53. Alternatively, the first flasher bulb 50 and the second flasher bulb 54 may be located below the position bulbs 52 and 53 depending on the shape of the lamp 8.
   In the preceding embodiment, the first flasher bulb 50 and the second flasher bulb 54 are located above the upper edge 46a of the connecting unit 43. Alternatively, the first flasher bulb 50 and the second flasher bulb 54 may be located below a lower edge 46b (see FIG. 5) of the connecting unit 43 depending on the shape of the lamp 8.
(e) In the preceding embodiment, the two position bulbs 52 and 53 are provided in the connecting unit 43. However, the number of position bulbs is not limited to two but only one position bulb may be provided in the connecting unit 43. However, it is preferable that two or more position bulbs are provided in the connecting unit 43 with a view to improving the visibility.
(f) In the preceding embodiment, the position bulbs 52 and 53 and the connecting lens unit 46 are provided in the connecting unit 43. However, a configuration of the connecting unit 43 is not limited to the configuration described in the preceding embodiment. For example, the position bulbs are not necessarily provided in the connecting unit 43 and the front surface of the connecting unit 43 may be formed into a grille shape. Alternatively, the front surface of the connecting unit 43 may be decorated, for example, by plating.

Moreover, a lens surface may be provided on the connecting unit 43 without providing the position bulbs 52 and 53 behind the lens surface.
(g) In the preceding embodiment, each of the boundary lines 66 and 67 may be formed not by the convex portion or step up but a concave portion or step down. Further, the first partition member 56 and the second partition member 57 may be employed as boundaries in place of the boundary lines 66 and 67, respectively. Moreover, a virtual line passing through an inflection point of an inner edge of the first flasher unit 41 and extending vertically may be employed as the boundary. The same thing is true for the second flasher unit 42.
(h) In the preceding embodiment, the first housing unit 45, the second housing unit 49 and the connecting housing unit 51 are formed integrally and seamlessly. Alternatively, the first housing unit 45, the second housing unit 49 and the connecting housing unit 51 may be formed separately and connected to one another. However, it is preferable to form the first housing unit 45, the second housing unit 49 and the connecting housing unit 51 integrally and seamlessly as stated above with a view to improving the mounting accuracy.

### Industrial Applicability

The present invention can advantageously improve the visibility of each flasher unit and suppress the deterioration in rigidity of the lamp, and is useful as a lamp and a motorcycle.

### Description of Reference Numerals

1: Motorcycle, 8: Lamp, 11: Head pipe, 21: Front cover, 41: First flasher unit (flasher unit), 42: Second flasher unit (flasher unit), 43: Connecting unit, 47, 53: Vent hole, 50: First flasher bulb (flasher bulb), 52, 53: Position bulb, 54: Second flasher bulb (flasher bulb).

## Claims

1. A lamp comprising:
a pair of right and left flasher units (41,42) each having a lens unit (44,48) with a vertical height (H1) which is larger than a horizontal width (W1) in a front view and/or a longitudinal length (L1) which is larger than the horizontal width (W1) in a top view; and
a connecting unit (43) which has a lens unit (46) and connects said flasher units (41,42) to each other;
wherein the lens unit (44, 48) of the pair of said flasher units (41,42) and the lens unit (46) of said connecting unit (43) include an integrated common lens surface; and
the vertical height (H1) of said lens unit (44,48) of each of said flasher units (41,42) is larger than a vertical height (H2) of said connecting unit (43) in the front view,
**characterized in that**
the lens unit (46) of said connecting unit (43) has a bent shape in the front view and/or the top view.

2. Lamp (8) according to claim 1, wherein the longitudinal length (L1) of said lens unit (44,48) of each of said flasher units (41,42) is larger than a longitudinal length (L2) of said lens unit (46) of said connecting unit (43) in the top view.

3. Lamp (8) according to any one of claims 1 or 2, wherein the light source (52,53) of said connecting unit (43) is a position light source (52,53).

4. Lamp (8) according to claim 3, wherein said connecting unit (43) includes at least two said position light sources (52,53).

5. Lamp (8) according to claim 3 or 4, wherein each of said flasher units (41,42) includes a respective flasher light source (50,54), and said flasher light sources (50,54) are vertically shifted from said position light source(s) (52,53) in the front view.

6. Lamp (8) according to claim 5, wherein said flasher light sources (50,51) are located above an upper edge of said connecting unit (43) or below a lower edge portion of said connecting unit (43).

7. Lamp (8) according to any one of claims 1 to 6, wherein a vent hole (47,59) is provided in an upper end of each of said flasher units (41,42).

8. Lamp (8) according to any one of claims 1 to 7, wherein the pair of said flasher units (41,42) and said connecting unit (43) include an integrated common housing (45,49,51).

9. Lamp (8) according to any one of claims 1 to 8, wherein the pair of said flasher units (41,42) and said connecting unit (43) include an integrated common lens surface.

10. Motorcycle (1) comprising:
a front cover (21) arranged in front of a head pipe (11); and
a lamp (8) which is in accordance with any one of claims 1 to 9 and is provided on said front cover (21).

## Patentansprüche

1. Einen Scheinwerfer aufweisend:
ein paar rechter und linker Blinkereinheiten (41, 42), jeder eine Linseneinheit (44, 48) aufweisend mit einer vertikalen Höhe (H1), welche größer als eine horizontale Breite (B1) in einer Frontansicht ist und/oder eine Längslänge (L1), welche größer als eine horizontale Breite (W1) in einer Draufsicht ist, und eine Verbindungseinheit (43), welche eine Linseneinheit (46) hat und die Blinkereinheiten (41, 42) miteinander verbindet, wobei die Lindeneinheit (44, 48) des Paares der Blinkereinheiten (41, 42) und die Linseneinheit (46) der Verbindungseinheit (43) eine integrierte gemeinsame Lindenoberfläche beinhalten, und die vertikale Höhe (H1) der Linseneinheiten (44, 48) der jeweiligen Blinkereinheiten (41, 42) größer als eine vertikale Höhe (H2) der Verbindungseinheit (43) in Frontsicht ist, **dadurch gekennzeichnet, dass** die Linseneinheit (46) der Verbindungseinheit (43) eine gekrümmte Form in Frontsicht und/oder in Draufsicht hat.

2. Scheinwerfer (8) nach Anspruch 1, wobei die Längslänge (L1) der Linseneinheit (44, 48) der jeweiligen Blinkereinheiten (41, 42) größer als eine Längslänge (L2) der Linseneinheit (46) der Verbindungseinheit (43) in Draufsicht ist.

3. Scheinwerfer (8) nach einem der Ansprüche 1 oder 2, wobei die Lichtquelle (52, 53) der Verbindungseinheit (43) eine Positionslichtquelle (52, 53) ist.

4. Scheinwerfer (8) nach Anspruch 3, wobei die Verbindungseinheit (43) wenigstens zwei Positionslichtquellen (52, 53) einfließt.

5. Scheinwerfer (8) nach dem Anspruch 3 oder 4, wobei jede der Blinkereinheiten (41, 42) eine entsprechende Blinkerlichtquelle (50, 54) beinhaltet, und die Blinkerlichtquellen (50, 54) vertikal versetzt von den Positionslichtquellen (52, 53) in einer Frontansicht ist.

6. Scheinwerfer (8) nach Anspruch 5, wobei die Blinkerlichtquellen (50, 51) oberhalb einer oberen Kante der Verbindungseinheit (43) oder unterhalb eines unteren Kantenbereichs der Verbindungseinheit (43) angeordnet ist.

7. Scheinwerfer (8) nach einem der Ansprüche 1 bis 6, wobei ein Belüftungsloch (47, 59) in einem oberen Ende der jeweiligen Blinkereinheiten (41, 42) vorgesehen ist.

8. Scheinwerfer (8) nach einem der Ansprüche 1 bis 7, wobei das Paar der Blinkereinheiten (41, 42) und die Verbindungseinheit (43) ein integriertes gemeinsames Gehäuse (45, 49, 41) beinhalten.

9. Scheinwerfer (8) nach einem der Ansprüche 1 bis 8, wobei das paar der Blinkereinheiten (41, 42) und die Verbindungseinheit (43) eine integrierte gemeinsame Linsenoberfläche beinhalten.

10. Motorrad (1) aufweisend:
eine Frontschürze (21), die vor einem Gabelkopf (11) angeordnet ist, und einen Scheinwerfer (8) entsprechend einem der Ansprüche 1 bis 9 und der in der Frontschürze (21) angeordnet ist.

## Revendications

1. Phare comprenant :
une paire d'unités de clignotant droite et gauche (41, 42) qui ont chacune une unité de lentille (44, 48) d'une hauteur verticale (H1) supérieure à une largeur horizontale (W1), vue de face, et/ou d'une longueur longitudinale (L1) supérieure à la largeur horizontale (W1), vue de dessus ; et
une unité de liaison (43) qui a une unité de lentille (46) et qui relie les unités de clignotant (41, 42) entre elles ;
étant précisé que l'unité de lentille (44, 48) de la paire d'unités de clignotant (41, 42) et l'unité de lentille (46) de l'unité de liaison (43) comprennent une surface de lentille commune réalisée d'une seule pièce ; et
que la hauteur verticale (H1) de l'unité de lentille (44, 48) de chacune des unités de clignotant (41, 42) est supérieure à une hauteur verticale (H2) de l'unité de liaison (43), vue de face,
**caractérisé en ce que** l'unité de lentille (46) de l'unité de liaison (43) a une forme courbe, vue de face et/ou vue de dessus.

2. Phare (8) selon la revendication 1, étant précisé que la longueur longitudinale (L1) de l'unité de lentille (44, 48) de chacune des unités de clignotant (41, 42) est supérieure à une longueur longitudinale (L2) de l'unité de lentille (46) de l'unité de liaison (43), vue de dessus.

3. Phare (8) selon l'une quelconque des revendications 1 ou 2, étant précisé que la source de lumière (52, 53) de l'unité de liaison (43) est une source de feu de position (52, 53).

4. Phare (8) selon la revendication 3, étant précisé que l'unité de liaison (43) comprend au moins deux sources de feu de position (52, 53).

5. Phare (8) selon la revendication 3 ou 4, étant précisé que chacune des unités de clignotant (41, 42) comprend une source de lumière de clignotant respective (50, 54), et que les sources de lumière de clignotant (50, 54) sont décalées verticalement par rapport à la ou aux sources de feu de position (52, 53), vues de face.

6. Phare (8) selon la revendication 5, étant précisé que les sources de lumière de clignotant (50, 51) se trouvent au-dessus d'un bord supérieur de l'unité de liaison (43) ou au-dessous d'une partie de bord inférieur de l'unité de liaison (43).

7. Phare (8) selon l'une quelconque des revendications 1 à 6, étant précisé qu'un trou d'aération (47, 59) est prévu dans une extrémité supérieure de chacune des unités de clignotant (41, 42).

8. Phare (8) selon l'une quelconque des revendications 1 à 7, étant précisé que la paire d'unités de clignotant (41, 42) et l'unité de liaison (43) comprennent un boîtier commun (45, 49, 51) réalisé d'une seule pièce.

9. Phare (8) selon l'une quelconque des revendications 1 à 8, étant précisé que la paire d'unités de clignotant (41, 42) et l'unité de liaison (43) comprennent une surface de lentille commune réalisée d'une seule pièce.

10. Motocycle (1) comprenant :
un capot avant (21) disposé devant un tube supérieur (11) ; et
un phare (8) selon l'une quelconque des revendications 1 à 9 et qui est prévu sur le capot avant (21).
